## Europäisches Patentamt

## European Patent Office

## Office européen des brevets

(19)

(11) Veröffentlichungsnummer: **0 218 234**
**B1**

(12) **EUROPÄISCHE PATENTSCHRIFT**

(45) Veröffentlichungstag der Patentschrift:
**02.08.89**

(51) Int. Cl.⁴: **G11B 5/706, C01G 37/02**

(21) Anmeldenummer: **86113874.1**

(22) Anmeldetag: **07.10.86**

(54) **Verfahren zur Stabilisierung von nadelförmigem ferromagnetischem Chromdioxid.**

(30) Priorität: **10.10.85 DE 3536116**
**11.01.86 DE 3600624**

(43) Veröffentlichungstag der Anmeldung:
**15.04.87 Patentblatt 87/16**

(45) Bekanntmachung des Hinweises auf die Patenterteilung:
**02.08.89 Patentblatt 89/31**

(84) Benannte Vertragsstaaten:
**DE FR GB NL**

(56) Entgegenhaltungen:
**EP-A- 0 027 640**

(73) Patentinhaber: **BASF Aktiengesellschaft,
Carl-Bosch-Strasse 38, D-6700 Ludwigshafen(DE)**

(72) Erfinder: **Steck, Werner, Dr., Auerstrasse 4,
D-6700 Ludwigshafen(DE)**
Erfinder: **Marosi, Laszlo, Dr., Leuschnerstrasse 32,
D-6700 Ludwigshafen(DE)**
Erfinder: **Haberkorn, Herbert, Dr., Oberer Bergelweg 5,
D-6718 Gruenstadt(DE)**
Erfinder: **Feser, Rainer, Dr.,
Gerhart-Hauptmann-Strasse 33, D-6717 Hessheim(DE)**
Erfinder: **Huebner, Werner, Hauptstrasse 48c,
D-6710 Frankenthal(DE)**
Erfinder: **Jakusch, Helmut, Dr., Lorscher Ring 6c,
D-6710 Frankenthal(DE)**

EP 0 218 234 B1

## Beschreibung

Die Erfindung betrifft ein Verfahren zur Stabilisierung von nadelförmigem ferromagnetischem Chromdioxid.

Die Herstellung von nadelförmigem ferromagnetischem Chromdioxid und die Verwendung dieses Materials für magnetische Aufzeichnungsträger ist vielfach beschrieben. Magnetische Aufzeichnungsträger, die Chromdioxid enthalten, zeigen im allgemeinen gegenüber Aufzeichnungsträgern auf Basis anderer magnetischer Oxide überlegene magnetische Eigenschaften.

Es ist jedoch auch bekannt, daß sich die magnetischen Eigenschaften von nichtstabilisiertem Chromdioxid enthaltenden Aufzeichnungsträgern im Laufe der Zeit verschlechtern. Ferromagnetisches Chromdioxid in Pulverform ist bei Ausschluß von Feuchtigkeit weitgehend stabil, auch ist eine Änderung der magnetischen Eigenschaften über lange Zeit nicht feststellbar. Es wurde aber beobachtet, daß Chromdioxid sowohl von Wasser als auch von anderen Materialien, beispielsweise dem bei der Herstellung von magnetischen Aufzeichnungsträgern verwendeten organischen Polymerbindemitteln unter Zersetzung zu nichtmagnetischen Bestandteilen angegriffen werden kann. Bei magnetischen Aufzeichnungsträgern bedeutet dies neben einem Verlust bei den magnetischen und somit elektroakustischen Eigenschaften auch eine Beeinträchtigung der mechanischen Werte. Diese Verschlechterung wird bei höheren Temperaturen noch beschleunigt. Es hat daher nicht an Versuchen gefehlt, diese Nachteile zu beseitigen. So beschreibt die US-A-3 512 930 die Behandlung von Chromdioxid-Pulver mit einem Reduktionsmittel, während gemäß der DE-A-2 325 132 die Einwirkung von gasförmigen Reduktionsmitteln den Curie-Punkt erhöhen soll. Nach anderen Verfahren werden Aluminiumoxid-Überzüge (US-A-3 687 726) oder solche aus schwerlöslichen Metallphosphaten (US-A 3 686 031) erzeugt. Auch das Aufbringen von Metallverbindungen, deren Kationen zur Bildung schwerlöslicher Chromate befähigt sind, ist bereits bekannt geworden. Die JA-A-21200/76 schlägt zur Umhüllung der Chromdioxid-Teilchen das oberflächliche Aufbringen magnetischer Eisenoxide vor, während gemäß der DE-A-27 49 757 Eisen-(III)-haltige oxidische Niederschläge auf das Chromdioxid aufgebracht werden.

Allen diesen Verfahren zur Stabilisierung von Chromdioxid gegen Abbau sowohl der magnetischen Eigenschaften als auch den der es umhüllenden Bindemittelmatrix ist gemeinsam, daß sie unter Verwendung spezieller Chemikalien eine mehrphasige oder voluminöse Schutzhülle aufbauen sollen. Dies bedeutet, daß sie entweder nur schwierig zu definieren und zu reproduzieren sind oder durch ihr Volumen den Anteil an magnetischer Substanz zu stark verringern.

Es bestand daher die Aufgabe, ein Verfahren zur Stabilisierung von nadelförmigem ferromagntischem Chromdioxid bereitzustellen, welches auf einfache und kontrollierbare Weise ein magnetisches Material liefert, das eingesetzt zur Herstellung von magnetischen Aufzeichnungsträgern, diesen die unbedingt geforderte hohe Qualität in den elektroakustischen Eigenschaften gibt und darüber hinaus eine gute Bandklimastabilität aufweist.

Es wurde nun gefunden, daß sich diese Aufgabe in überraschend einfacher Weise lösen läßt, wenn zur Verbesserung der Stabilität von nadelförmigem ferromagnetischen Chromdioxid dieses in einer wäßrigen Suspension in Gegenwart von Alkalihydroxiden bei einem pH-Wert von größer 9 auf eine Temperatur zwischen 35°C und dem Siedepunkt der Suspension zumindest 20 Minuten lang erhitzt wird.

In einer zweckmäßigen Ausgestaltung des erfindungsgemäßen Verfahrens wird der wäßrigen Suspension des Chromdioxids eine solche Menge Alkalihydroxid zugesetzt, daß der pH-Wert während der gesamten Behandlungsdauer auf Werte zwischen 9 und 12,5 eingestellt wird und die Dauer der Temperaturbehandlung zwischen 20 Minuten und höchstens 10 Stunden beträgt.

In einer besonderen Ausgestaltung des erfindungsgemäßen Verfahrens wird der wäßrigen Suspension des Chromdioxids eine solche Menge Alkalihyroxid zugesetzt, daß der Anfangs-pH-Wert mindestens 10 beträgt und die Dauer der Temperaturbehandlung wird zwischen 20 Minuten und höchstens 18 Stunden gewählt.

Das für das erfindungsgemäße Verfahren eingesetzte Chromdioxid wird nach bekannten und allgemein üblichen Verfahren hergestellt, wie beispielsweise in der EP-B-27 640 beschrieben. Es kann gegebenenfalls zweckmäßig sein, dieses Chromdioxidmaterial zuvor einer mechanischen Behandlung zu unterwerfen, wie z.B. einer Trocken- oder Naßmahlung oder es auch mechanisch zu verdichten oder bereits vorzudispergieren. In gleich vorteilhafter Weise läßt sich ein Chromdioxidmaterial einsetzen, das beispielsweise durch eine Reaktion mit Wasser entweder im Rahmen des üblichen Herstellungsprozesses oder durch eine gesonderte Nachbehandlung bereits zumindest teilweise auf seiner Oberfläche ortho-rhombisches CrOOH aufweist.

Zur Durchführung des erfindungsgemäßen Verfahrens wird das Chromdioxid in Wasser durch z.B. kräftiges Rühren suspendiert. Dabei ist es zweckmäßig ein Verhältnis von 1 Teil Pulver auf mindestens 4 Teile Wasser einzuhalten. Zu dieser Suspension wird nun das Alkalihydroxid, üblicherweise Natrium- und/oder Kaliumhydroxid, meist als wäßrige Lösung gegeben. Die Menge wird so gewählt, daß ein pH-Wert von mindestens 9 in einer Suspension besteht, wobei ein pH-Wert zwischen 9 und 12,5 besonders vorteilhaft ist. Anschließend wird die alkalische Chromdioxid-Suspension auf eine Temperatur von mindestens 35°C, insbesondere bis zur Siedehitze gebracht. Bei dieser Temperatur wird die Suspension mindestens 20 Minuten, jedoch nicht länger als 18 Stunden zweckmäßigerweise 1 bis 6 Stunden gehalten. Bei der Durchführung der erfindungsgemäßen Behandlung des Chromdioxids hat es sich als besonders

2

zweckmäßig herausgestellt, den pH-Wert der Suspension während der gesamten Behandlungsdauer konstant zu halten. Danach wird abfiltriert, mit Wasser gewaschen und der Filterkuchen in üblicher Weise z.B. mit Band- oder Sprühtrocknern getrocknet. Die Durchführung dieser Behandlung des Chromdioxids kann auch in einer Kreislaufapparatur erfolgen, in der gleichzeitig eine Naßmahlung, gegebenenfalls verbunden mit einer Teilchengrößenklassierung vorgenommen wird.

Mit dem erfindungsgemäßen Verfahren ist ein Chromdioxidmaterial erhältlich, dessen Teilchenaufbau aus einem $CrO_2$-Kern und einer unmagnetischen CrOOH-enthaltenden Hülle die gestellte Aufgabe der gleichzeitigen Verbesserung von wichtigen anwendungstechnischen Parametern bei sehr guter Bandklimastabilität erfüllt. Der Nachweis dieses Kern/Hülle-Teilchenmodells kann z.B. mit der bekannten Technik der Sekundärionen-Massenspektroskopie (SIMS) durch Aufnahme von Tiefenprofilen geführt werden. Diese Meßmethode ist u.a. in "Ullmann's Encyklopädie der technischen Chemie", 4. Auflage, Band 5, Seiten 519 bis 576 beschrieben.

Die vorteilhaften Eigenschaften der gemäß der Erfindung hergestellten Chromdioxide werden bei der Verwendung als magnetisches Material zur Herstellung von magnetischen Aufzeichnungsträgern deutlich. Die Verarbeitung erfolgt nach bekannten Methoden. Für die Herstellung der Magnetschicht werden 20 bisw 50 Gew.-Teile Chromdioxid mit einem Teil des Bindemittels bzw. -gemisches sowie den geeigneten Dispergierhilfsmitteln, Gleitmitteln und weiteren üblichen Zusatzstoffen in einer Gesamtmenge bis zu 10 Gew.% des Chromdioxids zu einer Dispersion verarbeitet. Die so erhaltene Dispersion wird filtriert und mit einer üblichen Beschichtungsmaschine, z.B. mittels eines Linealgießers, auf den unmagnetischen Träger in einer oder mehreren dünnen Schichten oder auf einen mit einer anderen Magnetschicht bereits versehenen Magnetogrammträger in dünner Schicht aufgetragen. Vor Trocknung der flüssigen Beschichtungsmischung bei Temperaturen zwischen 50 und 90°C wird gegebenenfalls eine magnetische Ausrichtung der Chrom dioxidteilchen vorgenommen. Für eine spezielle Oberflächenvergütung der Magnetschicht werden die beschichteten Folienbahnen zwischen geheizten polierten Walzen unter Druck hindurchgeführt. Danach betragen die Dicken der Magnetschichten üblicherweise zwischen 1,5 und 12 μm.

Als Bindemittel für die Magnetschichten können die bekannten Polymerbindemittel verwendet werden, wie Vinylchlorid-Copolymere, Acrylat-Copolymere, Polyvinylacetale, wie Polyvinylformal oder Polyvinylbutyral, höhermolekulare Epoxidharze, Polyurethane und Gemische dieser und ähnlicher Bindemittel. Als vorteilhaft haben sich die in einem flüchtigen organischen Lösungsmittel löslichen elastomeren und praktisch isocyanatgruppenfreien linearen Polyesterurethane erwiesen, wie sie durch Umsetzung eines Polyesters aus einer aliphatischen Dicarbonsäure mit 4 bis 6 C-Atomen, wie Adipinsäure, und mindestens einem aliphatischen Diol mit 3 bis 10 C-Atomen, wie 1,2- oder 1,3-Propylenglykol, 1,4-Butandiol, Diethylenglykol, Neopentylglykol oder 1,8-Octandiol, mit einem Diisocyanat mit 6 bis 24 und insbesondere 8 bis 20 C-Atomen, wie Toluylendiisocyanat oder 4,4'-Diisocyanatodiphenylmethan, bevorzugt in Gegenwart einer kleineren Menge eines Glykols mit 4 bis 10 C-Atomen, wie 1,4-Butandiol, das eine Kettenverlängerung bewirkt, hergestellt werden können. Bevorzugt sind solche Polyesterurethane aus Adipinsäure, 1,4-Butandiol und 4,4'-Diisocyanatodiphenylmethan. Bevorzugte Polyesterurethane haben eine Shore-Härte A von 70 bis 100, eine Festigkeit von 400 bis 420 kp/cm² und eine Dehnung von etwa 440 bis 560 %. Gut bewährt haben sich auch Polymerbindemittel auf der Basis eines Copolymerisates aus 70 bis 95 und insbesondere 75 bis 90 Gew.% Vinylchlorid und 5 bis 30 und insbesondere 10 bis 25 Gew.% eines Alkylesters einer olefinisch ungesättigten Carbonsäure mit 3 bis 5 C-Atomen, wie Acrylsäure, Methacrylsäure oder Maleinsäure, und bevorzugt mit 1 bis 3 C-Atomen im Alkylrest. Hervorzuheben sind hierbei die entsprechenden Vinylchlorid-Copolymerisate mit mindestens einem $C_1$- bis $C_3$-Dialkylmaleinat, wie Copolymerisate aus 70 bis 90 Gew.% Vinylchlorid, 5 bis 15 Gew.% Dimethylmaleinat und 5 bis 15 Gew.% Diethylmaleinat. Der K-Wert nach H. Fikentscher liegt für die besonders geeigneten Polymerbindemittel zwischen 40 und 60 (1 %ig in DMF).

Die unter Verwendung der erfindungsgemäß hergestellten Chromdioxide gefertigten magnetischen Aufzeichnungsträger weisen gegenüber den bekannten Chromdioxid enthaltenden Aufzeichnungsträgern eine verbesserte Empfindlichkeit und auch Aussteuerbarkeit in den Höhen bei gleichzeitig sehr guter Klimastabilität auf.

Anhand der folgenden Beispiele wird das erfindungsgemäße Verfahren näher erläutert und mit Vergleichsversuchen zum Stand der Technik in Beziehung gesetzt. Die magnetischen Werte der Pulverproben wurden mit einem Schwingmagnetometer bei einem magnetischen Feld von 160 kA/m oder nach Vormagnetisierung im Impulsmagnetisierer in einem Schwingmagnetometer gemessen. Die Werte der Koerzitivfeldstärke, $H_c$, gemessen in [kA/m], wurden bei den Pulvermessungen auf eine Stopfdichte von $\rho = 1,3$ g/cm³ bezogen. Spezifische Remanenz $(M_r/\rho)$ und Sättigung $(M_m/\rho)$ sind jeweils in [nTm³/g] angegeben. Die spezifische Oberfläche $S_{N_2}$ der Pigmente wird nach BET in m²/g bestimmt, d.h. an gewogenen evakuierten, gasfreien Pigmentproben wird Stickstoff adsorbiert. Die Differenzmenge Stickstoff vor und nach Adsorption wird in belegte Fläche umgerechnet und ins Verhältnis zur Einwaage gesetzt.

An den magnetischen Aufzeichnungsträgern wurde die Klimastabilität bei 65°C und 95 % relativer Feuchte bestimmt und zwar wird hierzu unter diesen Bedingungen ein magnetischer Aufzeichnungsträger im Klimaschrank 7 Tage gelagert und anschließend die remanente Magnetisierung bei Raumtemperatur gemessen. Angegeben wird der nach der Klimabeanspruchung gemessene $M_r$-Wert $(M_r(t))$ im Ver-

hältnis zum Ausgangswert ($M_r(o)$), bzw. bei einer Lagerdauer von 14 Tagen der $M_r(14)$-Wert. Die Bestimmung der magnetischen Eigenschaften erfolgt mittels eines Schwingmagnetometers bei einem Meßfeld von 160 kA/m. Dabei wird die Koerzitivstärke $H_c$ in [kA/m], die remanente Magnetisierung $M_r$ und die Sättigungsmagnetisierung $M_s$ in [mT] gemessen, sowie der Ausrichtfaktor Rf als der Quotient aus der Remanenz längs der magnetischen Vorzugsrichtung zu derjenigen in Querrichtung errechnet. Die elektromagnetischen Eigenschaften der magnetischen Aufzeichnungsträger wurden nach DIN 45 512, Blatt II, bezogen auf das IEC II-Bezugsband, bestimmt.

Außerdem wurden die Chromdioxidproben hinsichtlich ihrer Verarbeitbarkeit zur Herstellung von magnetischen Aufzeichnungsträgern untersucht. Zu diesem Zweck wurde ein sogenannter Glanzentwicklungstest zur Bestimmung der Dispergierhärte (DH-2) des Pigments und des erreichbaren Endaufteilungszustands ($G_{300}$) durchgeführt. Hierfür wurde die Dispergierung des Chromdioxids in einem Standardansatz vorgenommen und an Abstrichen mit dem Reflektometer der Fa. Lange, Berlin, in Abhängigkeit von der Zeit die Glanzwerte bestimmt. Aus der Zeitabhängigkeit der Glanzwerte errechnet sich ein Dispergierhärtewert nach

$$DH-2 = ( \frac{G_{300}'}{G_{75}} - 1 ) \cdot 100$$

Beispiel 1

Ein gemäß Beispiel 1 der EP-B 27 640 hergestelltes Chromdioxid wurde - ohne die Eisen(II)sulfat-Nachbehandlung - bei 120°C an Luft getrocknet (Probe 1). Dann wurde 100 Teile des Materials in 1500 Teilen Wasser bei 22°C aufgeschlämmt und unter kräftigem Rühren Natronlauge bis zum pH-Wert von 12 zugesetzt. Anschließend wurde bis zur Siedehitze erwärmt und für die in der Tabelle 1 genannte Zeitdauer unter Rühren auf dieser Temperatur gehalten (Proben 2, 3 und 4). Die noch heiße Suspension wurde schließlich filtriert, mit Wasser der Filterkuchen ausgewaschen und dieser bei 50°C in Wasserstrahlvakuum getrocknet.

Die magnetischen Eigenschaften der resultierenden Materialien sind in Tabelle 1 angegeben. Außerdem wurde an den Proben der Gehalt an $CrO_3$, bezogen auf $CrO_2$ photometrisch nach der Diphenylcarbazidmethode, wobei jeweils 1 g der Proben in 100 ml Wasser fünf Minuten erhitzt und das Filtrat zur Analyse herangezogen wurde.

Vergleichsversuch 1

Das in Beispiel 1 eingesetzte und bei 120°C an Luft getrocknete Chromdioxid im Verhältnis 1:10 in Wasser aufgeschlämmt, welches, bezogen auf das Chromdioxid 10 Gew.% Natriumsulfit enthielt. Die Suspension wurde bei Raumtemperatur 30 Minuten gerührt, das Chromdioxid dann abfiltriert, mit Wasser gewaschen und bei 50°C im Vakuum getrocknet (Probe 5). Die Ergebnisse sind in Tabelle 1 angegeben.

Beispiel 2

Wie in Beispiel 1 wurde ein gemäß Beispiel 1 der EP-B 27 640 hergestelltes jedoch mit 1,3 Gew.% Gamma-Eisen(III)oxid dotiertes Chromdioxid ohne die dort angegebene Nachbehandlung bei 120°C in einer Stickstoffatmosphäre getrocknet (Probe 6). 100 Teile dieser Probe 6 wurden in 1500 Teilen Wasser suspendiert und dann mit 15 %iger technischer Natronlauge ein pH von 12,2 eingestellt. Anschließend wurde innerhalb von 60 Minuten zur Siedehitze aufgeheizt und danach 7 Stunden bei dieser Temperatur gehalten. Hierbei wurden stündlich Proben entnommen (Proben 7 bis 12) und wie in Beispiel 1 beschrieben, untersucht. Ein Teil der Probe 12 wurde in der Suspension über Nacht abgekühlt, filtriert, gewaschen und bei 125°C sprühgetrocknet (Probe 13). Die Ergebnisse sind in Tabelle 1 angegeben.

Vergleichsversuch 2

Die gemäß Beispiel 2 erhaltene Probe 6 wurde bei 25°C in einer wäßrigen Suspension gemäß Beispiel 31 der DE-C 19 25 541 mit 13 Gew.% Natriumsulfit, bezogen auf die Menge Chromdioxid, behandelt, filtriert, gewaschen und sprühgetrocknet (Probe 14). Die Ergebnisse sind in Tabelle 1 angegeben.

Beispiel 3

Es wurde wie in Beispiel 2 beschrieben verfahren, jedoch war das Verhältnis Chromdioxid/Wasser in der Suspension 1:8. Die Verweilzeit in der alkalischen Suspension der Proben 15 bis 18 ist in der Tabelle angegeben, wobei die Probe 18 erst nach Abkühlen auf Raumtemperatur sprühgetrocknet wurde. Die Ergebnisse sind in Tabelle 1 angegeben.

Tabelle 1

| | Proben-Nr. | Dauer der Behandlung [h] | $H_c$ | $M_r$ | $M_m$ | mg $CrO_3$/ g $CrO_2$ |
|---|---|---|---|---|---|---|
| Bsp. 1 | 1 | — | 38 | 48 | 88 | 18,8 |
| Bsp. 1 | 2 | 6 | 43 | 40 | 75 | 5,4 |
| Bsp. 1 | 3 | 12 | 44 | 36 | 70 | 7,7 |
| Bsp. 1 | 4 | 18 | 44 | 36 | 68 | 8,2 |
| Vergl.-Vers. 1 | 5 | — | 41 | 41 | 76 | 8,8 |
| Bsp. 2 | 6 | — | 47 | 50 | 90 | 16,9 |
| Bsp. 2 | 7 | 1 | 52 | 44 | 78 | 4,4 |
| Bsp. 2 | 8 | 2 | 52 | 44 | 78 | 3,4 |
| Bsp. 2 | 9 | 3 | 50 | 43 | 77 | 3,4 |
| Bsp. 2 | 10 | 4 | 51 | 42 | 75 | 3,5 |
| Bsp. 2 | 11 | 5 | 52 | 42 | 74 | 3,6 |
| Bsp. 2 | 12 | 6 | 51 | 40 | 74 | 3,5 |
| Bsp. 2 | 13 | 6 m. Abkühlung | 51 | 41 | 73 | 4,8 |
| Vergl.-Vers. 2 | 14 | — | 49 | 44 | 77 | 8,3 |
| Bsp. 3 | 15 | 0,5 | 48 | 45 | 82 | 6,3 |
| Bsp. 3 | 16 | 1,0 | 49 | 44 | 80 | 7,2 |
| Bsp. 3 | 17 | 2,0 | 50 | 44 | 79 | 6,4 |
| Bsp. 3 | 18 | 2,0 m. Abkühlung | 49 | 43 | 77 | 7,5 |

Beispiel 4

In einer 250 Volumenteile fassenden und mit 100 Volumenteilen Stahlkugeln mit einem Durchmesser von 1,5 mm gefüllten Mühle wurden jeweils 40 Teile der in Tabelle 2 angegebenen Chromdioxidprobe mit 175 Teilen einer 13 %igen Lösung eines thermoplastischen Polyesterurethans aus Adipinsäure, 1,4-Butandiol, 4,4'-Diisocyanatodiphenylmethan in einem Gemisch aus gleichen Teilen Tetrahydrofuran und Dioxan, 150 Teile einer 13 %igen Lösung eines handelsüblichen Polyvinylformals in einer Mischung aus gleichen Teilen Tetrahydrofuran und Dioxan, 24 Teile eines Lösungsmittelgemisches aus gleichen Teilen Tetrahydrofuran und Dioxan und 1 Teil Zinkoleat gemischt und 4 Stunden dispergiert. Danach wurden nochmal die gleichen Mengen der beiden Bindemittellösungen, 13,5 Teile des genannten Lösungsmittelgemisches sowie 0,1 Teile eines handelsüblichen Silikonöls zugefügt und weitere 30 Minuten dispergiert. Anschließend wurde die Dispersion filtriert und auf einer üblichen Beschichtungsmaschine mittels eines Linealgießers und einer solchen Dicke auf eine 10 μm dicke Polyethylenterephthalatfolie aufgebracht, daß sich nach dem Trocknen und Kalandrieren eine Trockenschichtdicke von 5,5 μm ergab. Unmittelbar nach dem Aufgießen der flüssigen Dispersion wurden die nadelförmigen Chromdioxidteichen durch ein Magnetfeld längs der Aufzeichnungsrichtung orientiert. Die an den Bandproben gemessenen magnetischen und elektroakustischen Eigenschaften sowie die Bandklimastabilität sind in Tabelle 2 angegeben.

Tabelle 2

| | | $CrO_2$-Proben-Nr. | | | | | | | | | |
|---|---|---|---|---|---|---|---|---|---|---|---|
| | | 1 | 5 | 2 | 14 | 7 | 8 | 9 | 10 | 12 | 13 |
| $H_c$ | | 39 | 40 | 43 | 49 | 49 | 50 | 51 | 52 | 50 | 51 |
| $M_r$ | | 182 | 170 | 161 | 172 | 166 | 153 | 153 | 153 | 167 | 152 |
| $R_f$ | | 2,3 | 2,9 | 3,5 | 2,9 | 2,5 | 2,5 | 2,6 | 2,5 | 3,1 | 2,9 |
| Stabilität $M_r$ (t)/$M_r$ (o) | [%] | 80,0 | 89,0 | 90,5 | 88,2 | 88,9 | 89,5 | 90,2 | 89,9 | 89,8 | 88,7 |
| Höhenempfindlichkeit | $E_H$ | −0,7 | +0,6 | +1,3 | +2,0 | +3,5 | +2,5 | +3,5 | +2,5 | +3,5 | +4,0 |
| Höhenaussteuerbarkeit | $A_H$ | 0 | +1,4 | +2,0 | +3,0 | +3,5 | +4,0 | +5,0 | +3,5 | +5,5 | +6,0 |

Beispiel 5

Ein mit 0,3 Gew.% $Fe_3O_3$ und 0,14 % $Sb_2O_3$ als Dotierungsstoffe gemäß Beispiel 1 der EP-B 27 640 hergestelltes $CrO_2$ (mit einem BET-Wert von 26 m²/g) wurde - ohne die dort angegebene Eisen(II)-sulfat-Nachbehandlung - bei 120°C im Stickstoffstrom 80 Minuten lang getrocknet (Probe 1 mit $SN_2$-Wert nach BET von 25,3 m²/g). Dann wurden jeweils 100 Teile der Probe 1 in 1000 Teilen Wasser bei 20°C aufgeschlämmtj und unter Rühren mit einem Blattrührer auf die in der Tabelle 3 angegebene Behandlungstemperatur aufgeheizt. Nach Erreichen der gewünschten Behandlungstemperatur wurden mit wäßriger Natronlauge, die in der Tabelle 3 angegebenen pH-Werte der $CrO_2$-Suspension eingestellt und über eine automatische Regelung für die gleichfalls in der Tabelle 3 genannte Zeitdauer aufrecht erhalten. Nach bestimmten Zeiten wurden die mit Z gekennzeichneten Zwischenproben, entsprechend 100 ml der Suspension, gezogen und diese wie der Hauptteil des Reaktionsansatzes (H) filtriert und mit Wasser nachgewaschen. Der erhaltene, gewaschene Filtrkuchen wurde bei 50°C im Wasserstrahlvakuum getrocknet. Die an den so erhaltenen $CrO_2$-Pigmenten 1 bis H27 gemessenen Eigenschaften sind in der Tabelle 3 angegeben.

Vergleichsversuch 3

Das in Beispiel 5 eingesetzte und bei 120°C unter Stickstoff getrocknete Chromdioxid (Probe 1) wurde im Verhältnis 1:10 in Wasser aufgeschlämmt, welches, bezogen auf das Chromdioxid 13 Gew.% Natriumsulfit enthielt. Die Suspension wurde bei Raumtemperatur 30 Minuten gerührt, das Chromdioxid dann abfiltriert, mit Wasser gewaschen und bei 50°C im Vakuum getrocknet (Probe V3). Die Ergebnisse sind in Tabelle 3 angegeben.

Tabelle 3

| Beispiel | Proben-Nr. | Behandlungs-dauer [h] | T (°C) | pH | $H_c$ | $M_m$ | $M_r$ | DH-2 | $G_{300}$ | BET $m^2/g$ |
|---|---|---|---|---|---|---|---|---|---|---|
| 5 | 1 | – | – | – | 40 | 89 | 49 | | | 25,3 |
| | Z2 | 2 | 35 | 9,0 | 39 | 88 | 47 | | | |
| | Z3 | 4 | 35 | 9,0 | 39 | 89 | 46 | | | |
| | H4 | 6 | 35 | 9,0 | 39 | 89 | 46 | 17,8 | 92,4 | 25,6 |
| | Z5 | 2 | 35 | 10,5 | 40 | 90 | 49 | | | |
| | Z6 | 4 | 35 | 10,5 | 40 | 89 | 47 | | | |
| | H7 | 6 | 35 | 10,5 | 39 | 88 | 46 | 8,8 | 94,1 | 25,5 |
| | Z8 | 2 | 35 | 12,5 | 41 | 87 | 46 | | | |
| | Z9 | 4 | 35 | 12,0 | 41 | 85 | 45 | | | |
| | H10 | 6 | 35 | 12,0 | 40 | 87 | 46 | 5,2 | 94,8 | 25,4 |
| | Z11 | 2 | 55 | 9,0 | 40 | 83 | 44 | | | |
| | Z12 | 4 | 55 | 9,0 | 39 | 82 | 42 | | | |
| | H13 | 6 | 55 | 9,0 | 39 | 83 | 42 | 1,9 | 96,4 | 23,3 |
| | Z14 | 2 | 55 | 10,5 | 40 | 84 | 45 | | | |
| | Z15 | 4 | 55 | 10,5 | 40 | 83 | 43 | | | |
| | H16 | 6 | 55 | 10,5 | 40 | 80 | 42 | 2,7 | 97,1 | 26,0 |
| | Z17 | 2 | 55 | 12,0 | 40 | 86 | 45 | | | |
| | Z18 | 4 | 55 | 12,0 | 40 | 84 | 43 | | | |
| | H19 | 6 | 55 | 12,0 | 40 | 80 | 41 | 1,3 | 96,5 | 25,2 |
| | Z20 | 2 | 75 | 9,0 | 40 | 80 | 42 | | | |
| | Z21 | 4 | 75 | 9,0 | 40 | 76 | 40 | | | |
| | H22 | 6 | 75 | 9,0 | 40 | 74 | 39 | 3,1 | 97,2 | 26,8 |
| | Z23 | 2 | 75 | 10,5 | 41 | 78 | 41 | | | |
| | Z24 | 4 | 75 | 10,5 | 42 | 76 | 40 | | | |
| | H25 | 6 | 75 | 10,5 | 41 | 75 | 39 | 8,7 | 96,7 | 27,1 |
| | Z26 | 2 | 75 | 12,0 | 42 | 78 | 42 | | | |
| | H27 | 4 | 75 | 12,0 | 42 | 75 | 41 | 11,9 | 95,1 | 26,9 |
| Vergleichs-beispiel 3 | V3 | – | – | – | 41 | 78 | 42 | 23,7 | 91,8 | 25,8 |

Tabelle 4

| | | $CrO_2$-Proben-Nr. | | | | | | | | | |
|---|---|---|---|---|---|---|---|---|---|---|---|
| | | H4 | H7 | H10 | H13 | H16 | H19 | H22 | H25 | H27 | V3 |
| $H_c$ | [kA/m] | 39 | 40 | 39 | 39 | 39 | 39 | 39 | 40 | 41 | 40 |
| $M_r$ | [mT] | 201 | 192 | 190 | 181 | 180 | 187 | 177 | 167 | 163 | 161 |
| $M_r/M_m$ | | 0,91 | 0,92 | 0,91 | 0,92 | 0,91 | 0,91 | 0,91 | 0,90 | 0,90 | 0,89 |
| $R_f$ | | 3,8 | 3,9 | 3,8 | 4,1 | 3,6 | 3,9 | 3,8 | 3,3 | 3,7 | 2,9 |
| $M_r$ (14) | [mT] | 153 | 150 | 158 | 157 | 158 | 163 | 158 | 152 | 143 | 140 |

Beispiel 6

In einer 250 Volumenteile fassenden und mit 100 Volumenteilen Stahlkugeln mit einem Durchmesser von 1,5 mm gefüllten Mühle wurden jeweils 40 Teile der in Tabelle 4 angegebenen Chromdioxidprobe mit 175 Teilen einer 13 %igen Lösung eines thermoplastischen Polyesterurethans aus Adipinsäure, 1,4-Butandiol, 4,4'-Diisocyanatodiphenylmethan in einem Gemisch aus gleichen Teilen Tetrahydrofuran und Dioxan, 150 Teile einer 13 %igen Lösung eines handelsüblichen Polyvinylformals in einer Mischung aus gleichen Teilen Tetrahydrofuran und Dioxan, 24 Teile eines Lösungsmittelgemisches aus gleichen Teilen Tetrahydrofuran und Dioxan und 1 Teil Zinkoleat gemischt und 4 Stunden dispergiert. Danach wurden nochmal die gleichen Mengen der beiden Bindemittellösungen, 13,5 Teile des genannten Lösungsmittelgemisches sowie 0,1 Teile eines handelsüblichen Silikonöls zugefügt und weitere 30 Minuten dispergiert. Anschließend wurde die Dispersion filtriert und auf einer üblichen Beschichtungsmaschine mittels eines Linealgießers und einer solchen Dicke auf eine 10 μm dicke Polyethylenterephthalatfolie aufgebracht, daß sich nach dem Trocknen und Kalandrieren eine Trockenschichtdicke von 5,5 μm ergab. Unmittelbar nach dem Aufgießen der flüssigen Dispersion wurden die nadelförmigen Chromdioxidteichen durch ein Magnetfeld längs der Aufzeichnungsrichtung orientiert. Die an den Bandproben gemessenen magnetischen Eigenschaften sowie die Bandklimastabilität sind in Tabelle 4 angegeben.

## Patentansprüche

1. Verfahren zur Stabilisierung von nadelförmigem ferromagnetischem Chromdioxid, das durch Umsetzen von Oxiden des 3-wertigen und 6-wertigen Chroms bei erhöhtem Druck und erhöhter Temperatur in Gegenwart von Wasser und Modifizierungsmittel erhalten wird, dadurch gekennzeichnet, daß das Chromdioxid in einer wäßrigen Suspension in Gegenwart von Alkalihydroxiden bei einem pH-Wert von größer als 9 auf eine Temperatur zwischen 35°C und dem Siedepunkt der Suspension mindestens 20 Minuten lang erhitzt wird.

2. Verfahren nach Anspruch 1, dadurch gekennzeichnet, daß der Anfangs-pH-Wert der Suspension während der gesamten Behandlungsdauer konstant auf Werte zwischen 9 und 12,5 eingestellt und die Temperaturbehandlung bei Temperaturen zwischen 35 und 75°C während 20 Minuten und bis zu 10 Stunden durchgeführt wird.

3. Verfahren gemäß Anspruch 1, dadurch gekennzeichnet, daß der Anfangs-pH-Wert der Suspension mindestens 10 beträgt und die Temperaturbehandlung bei Temperaturen zwischen 80°C und dem Siedepunkt der Suspension während 20 Minuten und bis zu 18 Stunden durchgeführt wird.

4. Verwendung der gemäß einem der Ansprüche 1 bis 3 erhaltenen Chromdioxide zur Herstellung von magnetischen Aufzeichnungsträgern.

## Revendications

1. Procédé pour la stabilisation de bioxyde de chrome ferromagnétique aciculaire, qui est obtenu par réaction d'oxydes du chrome trivalent et hexavalent, à pression élevée et température élevée, en présence d'eau et d'agent de modification caractérisé par le fait qu'on chauffe le bioxyde de chrome pendant au moins 20 minutes, dans une suspension aqueuse, en présence d'hydroxdyes alcalins, à un pH supérieur à 9 et à une température comprise entre 35°C et le point d'ébullition de la suspension.

2. Procédé selon la revendication 1, caractérisé par le fait que l'on règle le pH initial de la suspension, pendant toute la durée du traitement, à une valeur constante comprise entre 9 et 12,5 et on effectue le traitement de température à des températures comprises entre 35 et 75°C, pendant 20 minutes et jusqu'à 10 heures.

3. Procédé selon la revendication 1, caractérisé par le fait que le pH initial de la suspension est au moins 10 et la traitement de température est effectué à des températures comprises entre 80°C et le point d'ébullition de la suspension pendant 20 minutes et jusqu'à 18 heures.

4. Utilisation des bioxydes de chrome obtenus selon l'une des revendications 1 à 3 pour la fabrication de supports d'enregistrement magnétiques.

## Claims

1. A process for stabilizing acicular ferrogmagnetic chromium dioxide which is obtained by converting oxides of trivalent and hexavalent chromium under superatmospheric pressure and at elevated temperatures in the presence of water and modifiers, wherein the chromium dioxide is heated in an aqueous suspension in the presence of an alkali metal hydroxide at a pH greater than 9 and at from 35°C to the boiling point of the suspension for not less than 20 minutes.

2. A process as claimed in claim 1, wherein the initial pH of the suspension is brought to a constant value of from 9 to 12.5 for the entire duration of the treatment, and the heat treatment is carried out at from 35 to 75°C for from 20 minutes to 10 hours.

3. A process as claimed in claim 1, wherein the initial pH of the suspension is not less than 10 and the heat treatment is carried out at from 80°C to the boiling point of the suspension from 20 minutes to 18 hours.

4. The use of chromium dioxide obtained as claimed in any of claims 1 to 3 for the preparation of magnetic recording media.